Europäisches Patentamt

European Patent Office

Office européen des brevets

(11) Veröffentlichungsnummer: **0 327 672**
**A2**

## (12) EUROPÄISCHE PATENTANMELDUNG

(21) Anmeldenummer: 88114496.8

(51) Int. Cl.4: **B64C 27/41**

(22) Anmeldetag: 06.09.88

(30) Priorität: 11.02.88 DE 3804203

(43) Veröffentlichungstag der Anmeldung:
16.08.89 Patentblatt 89/33

(84) Benannte Vertragsstaaten:
DE ES FR GB IT NL

(71) Anmelder: Messerschmitt-Bölkow-Blohm
Gesellschaft mit beschränkter Haftung
Robert-Koch-Strasse
D-8012 Ottobrunn(DE)

(72) Erfinder: Mautz, Karlheinz
Brennerstrasse 13
D-8012 Ottobrunn(DE)
Erfinder: Schwarz, Alois
Ahornweg 21
D-8011 Putzbrunn(DE)

(54) **Rotor mit einem schlaggelenkigen Blattanschluss im Rotorzentrum.**

(57) Bei einem Rotor mit einem schlaggelenkigen Blattanschluß (2) sämtlicher Rotorblätter(1) im Rotorzentrum und mit einem Rotorantrieb über ein Mitnehmergestänge zwischen einer Antriebswelle (3) und einer die Rotorblätter (1) vereinigenden Rotornabe (4) ist jenes mindestens ein Lenker (5) aus zwei durch ein allseitig winkelbewegliches Gelenklager (6) verbundenen Stangen (5.1, 5.2) gleicher Länge, wobei die eine Stange (5.1) antriebswellenseitig und die andere Stange (5.2) rotornabenseitig in Blattschlagrichtung winkelbeweglich gelagert ist jeweils um einen Drehpunkt auf der Mittelachse (3.1) der Antriebswelle (3) oder auf einer hierzu Parallelen (3.1.1) und mit jeweils gleichem Abstand (a) vom Zentrum des schlaggelenkigen Blattanschlusses . Hierdurch ist Gleichlauf zwischen der Antriebswelle (3) und dem Rotor sichergestellt.

FIG. 1

## Rotor mit einem schlaggelenkigen Blattanschluß im Rotorzentrum

Die Erfindung betrifft einen Rotor gemäß dem Oberbegriff des Patentanspruchs 1.

Bei einem derartigen sog. halbstarren Rotor erfolgt bisher der Rotorantrieb mittels der Antriebswelle über sog. Schleppstangen. Hiermit läßt sich beim Blattschlagen eine gleichförmige Drehmitnahme des Rotors, d.h. Gleichlauf desselben mit der Antriebswelle nicht erreichen. Demzufolge muß u.a. mit Massekräften aus Drehbeschleunigungen des Rotors gerechnet werden, welche nicht nur dessen Struktur, sondern auch das Getriebe der Antriebswelle zusätzlich belasten. Außerdem kann es zu Zwangsverformungen im Mitnehmergestänge (Schleppstangen) kommen.

Der Erfindung liegt daher die Aufgabe zugrunde, bei einem Rotor der eingangs genannten Art Gleichlauf desselben mit seiner Antriebswelle sicherzustellen.

Diese Aufgabe ist für einen gattungsgemäßen Rotor mit den kennzeichnenden Merkmalen des Patentanspruchs 1 gelöst. Damit stellt sich unter Blattschlagwinkelbewegungen des Rotors zwangsläufig eine Lageveränderung des Gelenklagers des Lenkers jeweils um den halben Blattschlagwinkel ein mit der Folge einer gleichförmigen Rotorbeschleunigung in Bezug auf die Rotor-Antriebswelle, d.h. zwischen dieser und dem angetriebenen Rotor werden Winkelbeschleunigungen unterbunden. Voraussetzung hierfür ist bei der Verwendung mehrerer Lenker die im Anspruch 2 gekennzeichnete Weiterbildung der Erfindung. Schließlich hat die Erfindung noch den Vorteil, daß sie durch die im Anspruch 3 gekennzeichnete Ausgestaltung der drehwinkelbeweglichen Lagerung der einzelnen Lenker-Stange der dynamischen bzw. Laufstabilität des Rotors förderlich sein kann durch aus Blattschlagwinkelbewegungen resultierende Rückstellmomentenwirkungen der Biegefedern.

Im folgenden wird die Erfindung anhand von Ausführungsbeispielen weiter erläutert. Dabei zeigt die Zeichnung die Antriebsmittel von halbstarren Rotoren, und zwar in

Fig. 1 und 3 jeweils in der Seitenansicht bei einem Dreiblattrotor entsprechend der in

Fig. 2 bzw. 4 dargestellten Draufsicht,

Fig. 5 in der Seitenansicht bei einem Vierblattrotor entsprechend der in

Fig. 6 dargestellten Draufsicht.

Die dargestellten Rotoren, z.B. für ein Kippflügelflugzeug, sind solche der sog. halbstarren Bauweise mit einem schlaggelenkigen Blattanschluß sämtlicher Rotorblätter 1 im Rotorzentrum mittels eines allseitig winkelbeweglichen Gelenklagers 2 vorzugweise in Form eines Elastomerlagers. Dessen inneres kugelförmiges Lagerteil 2.1 ist mit einer Rotor-Antriebswelle 3 verbunden, wogegen das äußere Lagerteil 2.2 in einer die Rotorblätter 1 vereinigenden biegesteifen Rotornabe 4 eingebettet ist. Beispielsweise bestehen beide Lagerteile 2.1, 2.2 aus Metall und sind über ein elastomeres Zwischenteil 2.3 aus abwechselnden Gummi- und Metallschichten verbunden.

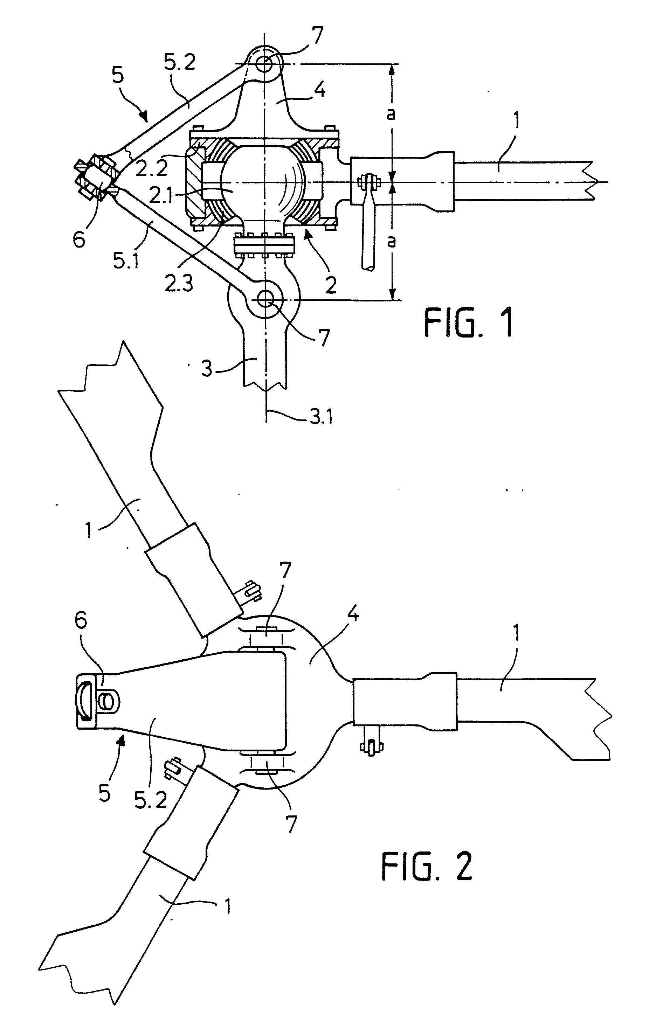

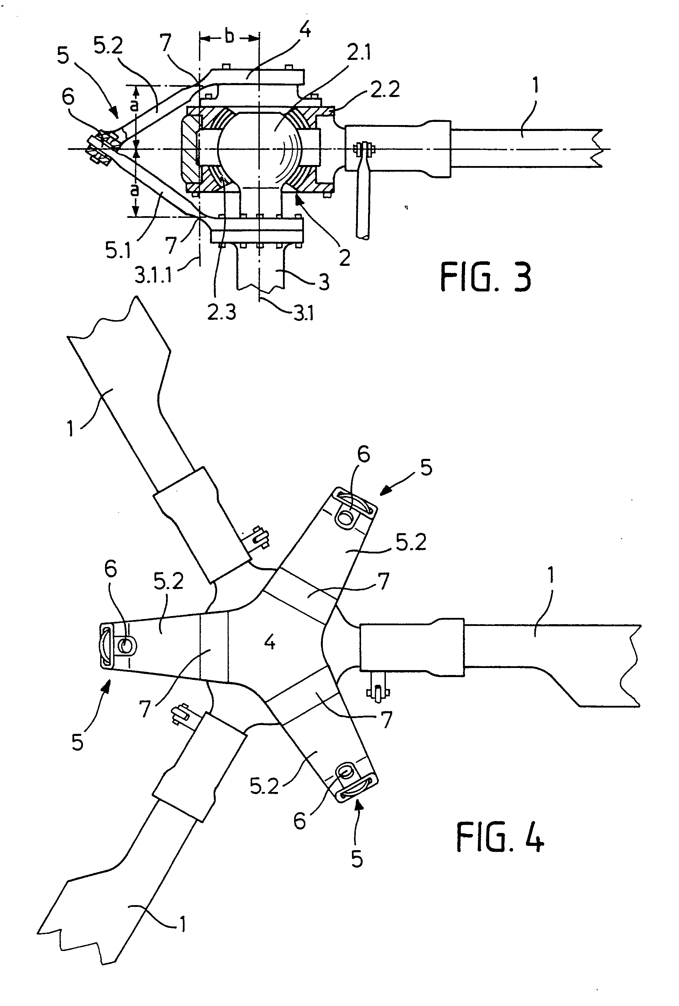

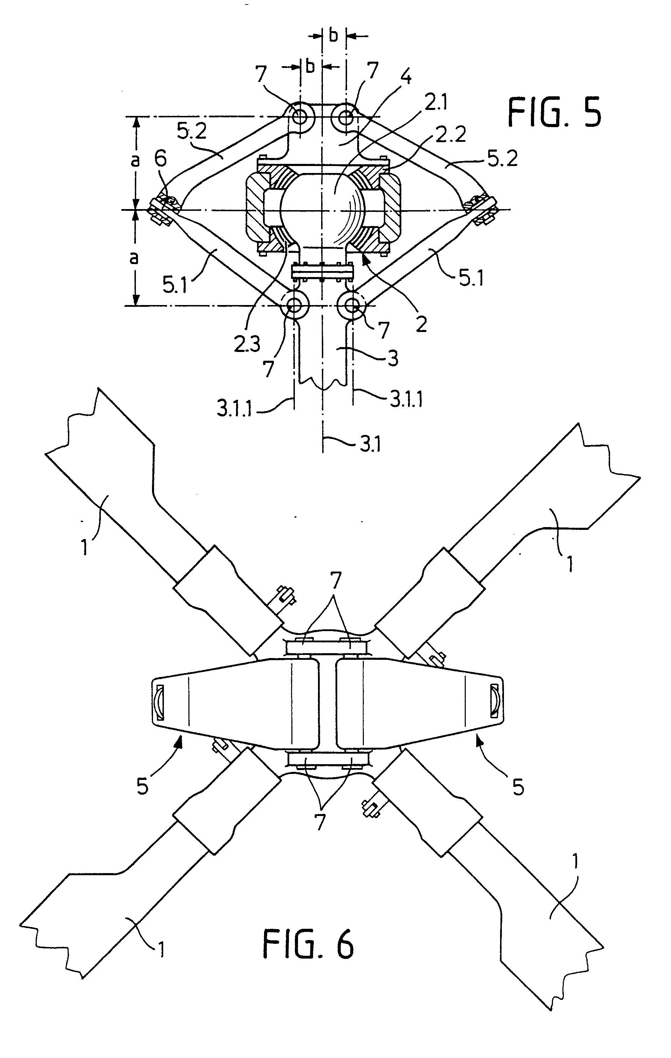

Der Umlauf der Rotorblätter 1 wird mittels der Antriebswelle 3 durch Drehen der Rotornabe 4 über einen (Fig. 1, 2) oder mehrere (Fig. 3, 4, 5, 6) Mitnehmer jeweils in Form eines Lenkers 5 bewirkt. Damit hierbei Winkelbeschleunigungen (bzw. -verzögerungen) zwischen der Antriebswelle 3 und der Rotornabe 4 beim Blattschlagen ausgeschlossen sind, besteht der einzelne Lenker 5 aus zwei durch ein allseitig winkelbewegliches Gelenklager 6 verbundenen Stangen 5.1, 5.2 gleicher Länge, von denen die eine Stange 5.1 mit der Antriebswelle 3 und die andere Stange 5.2 mit der Rotornabe 4 in Blattschlagrichtung drehwinkelbeweglich verbunden ist. Dabei muß gemäß Fig. 1 der Drehpunkt der betreffenden beiden Drehgelenke 7 je Lenker 5 auf der Mittelachse 3.1 der Rotor-Antriebswelle 3 liegen oder gemäß Fig. 3, 5 auf einer hierzu Parallelen 3.1.1. Außerdem muß jeweils der gleiche Abstand a zwischen dem Drehpunkt des einzelnen Drehgelenkes 7 und dem Zentrum des Rotors bzw. Gelenklagers 2 bestehen. Bei den Rotoren gemäß Fig. 3, 4 und 5, 6 jeweils mit mehreren Lenkern 5 sind zudem die Drehpunkte der Drehgelenke 7 mit jeweils gleichem Abstand b von der Mittelachse 3.1 der Rotor-Antriebswelle 3 angeordnet. Diese Mitnehmeranordnungen haben gegenüber derjenigen gemäß Fig. 1, 2 mit nur einem Lenker 5 den Vorteil einer querkraftfreien Drehmomentenübertragung bezüglich des Gelenklagers 2 des Rotors.

Schließlich hat die in Fig. 3, 4 dargestellte Ausbildung des einzelnen Drehgelenkes 7 je Lenker-stange 5.1 bzw. 5.2 in Form einer Biegefeder den bereits erwähnten Vorteil, daß solche federnden Drehgelenke 7 beim Blattschlagen als Rückstellfedern wirksam sind. Außerdem können die Lenker 5 durch diese federnden Drehgelenke 7 zu integralen Bestandteilen der Rotornabe 4 werden, deren Aufbau dann zweckmäßig aus faserverstärktem Kunststoff besteht.

## Ansprüche

1. Rotor, insbesondere eines Drehflügelflugzeugs, mit einem schlaggelenkigen Blattanschluß sämtlicher Rotorblätter im Rotorzentrum und mit einem Rotorantrieb über ein Mitnehmergestänge zwischen einer Antriebswelle und einer die Rotorblätter vereinigenden Rotornabe, **gekennzeichnet** durch ein Mitnehmergestänge in Form mindestens eines Lenkers (5) aus zwei durch ein allseitig winkelbewegliches Gelenklager (6) verbundenen Stangen (5.1, 5.2) gleicher Länge, wobei die eine Stange (5.1) antriebswellenseitig und die andere Stange (5.2) rotornabenseitig in Blattschlagrichtung winkelbeweglich gelagert ist jeweils um einen Drehpunkt auf der Mittelachse (3.1) der Antriebswelle (3) oder auf einer hierzu Parallelen (3.1.1) und mit jeweils gleichem Abstand (a) vom Zentrum des schlaggelenkigen Blattanschlusses (Gelenkager 2).

2. Rotor nach Anspruch 1 mit mehreren Lenkern, **dadurch gekennzeichnet,** daß die Drehpunkte der Lenker-Stangen (5.1, 5.2) mit jeweils gleichem Abstand (b) von der Mittelachse (3.1) der Rotor-Antriebswelle (3) angeordnet sind.

3. Rotor nach Anspruch 1 oder 2, **gekennzeichnet** durch winkelbewegliche Lagerungen (Drehgelenke 7) der Lenker-Stangen (5.1, 5.2) in Form von Biegefedern.

FIG. 1

FIG. 2

10425

FIG. 3

FIG. 4

10425

FIG. 5

FIG. 6